# EUROPÄISCHE PATENTSCHRIFT

(11) **EP 4 056 004 B1**
(45) Veröffentlichungstag und Bekanntmachung des Hinweises auf die Patenterteilung: **24.07.2024**
(21) Anmeldenummer: 22158592.0
(22) Anmeldetag: 24.02.2022
(51) Int. Cl.: A01B 33/00, A01B 33/08, A01B 33/16, A01B 71/02, A01D 43/00, A01D 69/00, A01D 69/08, A01D 78/02, A01F 15/08

(54) **LANDWIRTSCHAFTLICHES ANBAUGERÄT**
AGRICULTURAL DEVICE
ACCESSOIRE AGRICOLE

(30) Priorität: 10.03.2021 DE 202021101208 U; 11.05.2021 DE 202021102546 U
(43) Veröffentlichungstag der Anmeldung: 14.09.2022
(73) Patentinhaber: Pöttinger Landtechnik GmbH, 4710 Grieskirchen (AT)
(72) Erfinder: Prechtl, Wolfgang, 4710 Grieskirchen (AT); Jäger, Christian, 4710 Grieskirchen (AT); Pfeiffer, Stefan, 4710 Grieskirchen (AT)
(74) Vertreter: Thoma, Michael

(56) Entgegenhaltungen:
- EP-A1- 0 876 752
- EP-A1- 3 815 507
- DE-A1- 102018 129 598
- DE-A1- 19 701 421
- DE-C2- 19 831 506
- DE-U1- 29 504 531

## Beschreibung

Die vorliegende Erfindung betrifft ein landwirtschaftliches Anbaugerät zum Anbau an einen Schlepper, mit einem Antriebsstrang zum Antreiben von Arbeitsaggregaten des Anbaugeräts, wobei der Antriebsstrang ein zentrales Eingangsgetriebe, das über eine Gelenkwelle an die Zapfwelle des Schleppers anschließbar ist, sowie zumindest eine Überlastkupplung zum Schutz des Antriebsstrangs und der Arbeitsaggregate vor Überlastung aufweist.

Solche Überlastkupplungen im Antriebsstrang landwirtschaftlicher Anbaugeräte sind beispielsweise aus den Schriften DE 197 01 421 A1, EP 38 15 507 A1, EP 0 876 752 A1, DE 198 31 506 C2, DE 295 04 531 U1 und DE 10 2018 129 598 A1 bekannt. Dabei zeigt beispielsweise die erstgenannte DE 197 01 421 A1 eine Ballenpresse, bei der die Stachelwalze der Pickup und der nachgeordnete Förderrotor über gekoppelte Riemen- bzw. Kettenstufen angetrieben werden, und zwar von einer Antriebswelle, die über ein zentrales Eingangsgetriebe an die Gelenkwelle des Schleppers gekoppelt ist. Eine Überlastkupplung sitzt zwischen dem genannten Eingangsgetriebe und den gekoppelten Riemenstufen.

Bei landwirtschaftlichen Anbaugeräten werden üblicherweise diverse Arbeitsaggregate zentral von der Zapfwelle des Schleppers über einen mechanischen Antriebsstrang angetrieben, der üblicherweise ein zentrales Eingangsgetriebe aufweist, das durch eine Gelenkwelle an die Zapfwelle des Schleppers angeschlossen wird. Das zentrale Eingangsgetriebe empfängt die volle Antriebsleistung der Zapfwelle und bildet insofern einen Teil des Hauptantriebsstrangs, bevor sich dieser in Nebenantriebsstränge aufspaltet, die nur noch einen Teil der Antriebsleistung übertragen und zu den diversen Arbeitsaggregaten führen.

Dabei können je nach Anbaugerätetyp mehrere Arbeitsaggregate gleichzeitig angetrieben werden, sodass das Eingangsgetriebe beträchtliche Antriebsleistungen übertragen muss. Beispielsweise werden bei einem Ladewagen die Aufnahmevorrichtung mit einer Stachelwalze zum Aufnehmen von Erntegut vom Boden, der nachgeordnete Förderrotor zum Weiterfördern des Ernteguts in den Ladespeicher und ggf. dabei erfolgendem Zerschneiden des Ernteguts im Zusammenspiel mit einem Schneidwerk, und ein Kratzboden zum Verteilen des Ernteguts im Ladespeicher ggf. gleichzeitig über den mechanischen Antriebsstrang angetrieben. Beim Abladen kann zusätzlich ein Dosierwalzenantrieb am Heck des Ladewagens angetrieben werden, ggf. zusätzlich zum Antreiben des Kratzbodens, wobei je nach Ladewagen auch noch weitere Antriebe vorgesehen sein können, beispielsweise zum Verschwenken von Pressklappen oder Laderaumwänden. In ähnlicher Weise werden auch bei einer Ballenpresse über den zentralen, mechanischen Antriebsstrang eine Aufnahmevorrichtung mit einer Stachelwalze, ein nachgeordneter Förderrotor zum Weiterfördern des Ernteguts in die Ballenformkammer, ggf. im Zusammenspiel mit einem Schneidwerk, sowie weitere Förderwalzen und Riementriebscheiben der Ballenformkammer vom zentralen Antriebsstrang her angetrieben.

Um das zentrale Eingangsgetriebe, das die volle Antriebsleistung im Hauptantriebsstrang übertragen muss, vor Überlastungen zu schützen, ist es bekannt, zwischen der an die Zapfwelle des Schleppers angeschlossenen Gelenkwelle und dem Eingangsgetriebe eine Überlastkupplung vorzusehen, die bei zu hohen Antriebsleistungen oder Drehmomentstößen durchrutscht, abschert oder in anderer Weise auskuppelt, sodass die Antriebsleistung der Zapfwelle nicht mehr auf das Eingangsgetriebe gegeben wird, vgl. beispielsweise die Schrift DE 10 2011 055 206 A1, gemäß der die Überlastkupplung zwischen dem Eingangszapfen des Zentralgetriebes und der Gelenkwelle sitzen soll.

Gemäß der Schrift DE 101 45 407 C2 soll die vor dem zentralen Eingangsgetriebe sitzende Überlastkupplung an das abtriebsseitige Gelenk der Gelenkwelle angeschlossen sein.

Bei solchen herkömmlichen Überlastkupplungen treten jedoch bisweilen ungleichmäßige Auslösewerte auf, was im Wesentlichen daran liegt, dass der Abschaltwert aufgrund der Abwinkelung der Gelenkwelle schwanken kann. Durch die Gelenke der Gelenkwelle kommt es zu Torsionsschwingungen, die sich auf die Überlastkupplung übertragen und dort dazu führen können, dass die Überlastkupplung bei unterschiedlichen Belastungswerten auslösen kann. Hintergrund dieser Problematik ist es, dass die Gelenkwelle in Hochleistungserntegeräten hohen Belastungen ausgesetzt ist, da das Leistungsangebot der Zugfahrzeuge sich steigert und mit immer höheren Verarbeitungsleistungen am Anbaugerät gefahren wird. Die Gelenkwelle ist aufgrund der auftretenden Abwinkelung im Einsatz an beiden Enden mit einfachen Gelenken oder Weitwinkelgelenken ausgestattet, die zwar weitgehend Gleichlaufgelenke sind, aber dennoch Drehschwingungen auftreten lassen, die bei den hohen Übertragungsleistungen an der Überlastkupplung zu unkontrolliertem Ansprechen führen können.

Um dieser Problematik entgegenzuwirken, wurde bereits angedacht, zwischen der Gelenkwelle und der dem Eingangsgetriebe vorgeschalteten Überlastkupplung eine zusätzliche Lagerstelle vorzusehen, beispielsweise einen an der Deichsel festgeschweißten Lagerbock, der zwar Querschwingungen der Gelenkwelle auffangen kann, jedoch die genannten Dreh- bzw. Torsionsschwingungen nicht von der Überlastsicherung fernhalten kann und darüber hinaus die Kupplungsstelle weiter nach vorne verschiebt und damit die Gelenkwelle verkürzt, was je nach Gerätetyp zu erhöhten Knickwickeln an den Gelenken führen kann.

Andererseits wurde bereits vorgeschlagen, Überlastkupplungen unmittelbar an überlastungsgefährdeten Arbeitsaggregaten bzw. in den dort hinführenden Nebenantriebssträngen vorzusehen, um ein feinfühligeres Abkuppeln einzelner Arbeitsaggregate zu ermöglichen. Solche in den Nebenantriebssträngen vorgesehenen Überlastkupplungen können durch eine in der Realität stets gegebene Ansprechträgheit das zentrale Eingangsgetriebe, an dem sich die Antriebsleistungen kumulieren bzw. die volle Antriebsleistung von der Schlepperzapfwelle her anliegt, nur ungenügend schützen.

Der vorliegenden Erfindung liegt daher die Aufgabe zugrunde, ein verbessertes landwirtschaftliches Anbaugerät der genannten Art zu schaffen, das Nachteile des Standes der Technik vermeidet und letzteren in vorteilhafter Weise weiterbildet. Insbesondere soll das zentrale Eingangsgetriebe nebst daran angeschlossener Gelenkwelle verlässlich und schnell ansprechend vor Überlastungen geschützt werden, ohne ungewollte Fehlauslösungen beispielsweise durch Drehschwingungen von der Gelenkwelle her zu erleiden.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, eine Überlastsicherung nach dem zentralen Eingangsgetriebe, aber noch vor dem vom Antriebsstrang anzutreibenden Arbeitsrotor vorzusehen, so dass der genannte Arbeitsrotor von der Überlastsicherung abgesichert wird. Nach dem zentralen Eingangsgetriebe meint dabei auf der Abtriebsseite des Eingangsgetriebes bzw. in Richtung des Kraft- bzw. Leistungsflusses von der Schlepperzapfwelle zu den Arbeitsaggregaten hinter bzw. stromab des Eingangsgetriebes.

Die genannte Überlastsicherung ist im Antriebsstrang insbesondere noch vor dem Hauptarbeitsrotor des Anbaugeräts vorgesehen, um den genannten Hauptarbeitsrotor abzusichern. Im Falle eines Ladewagens oder einer Ballenpresse kann der genannte Hauptarbeitsrotor der dem Schneidwerk zugeordnete Förderrotor sein, der das von der Pickup aufgenommene Erntegut durch das Schneidwerk treibt. Je nach Ausbildung des Anbaugeräts kann der genannte Hauptarbeitsrotor eine höhere Antriebsleistung als die übrigen Arbeitsaggregate benötigen bzw. verbrauchen und/oder permanent laufen und/oder zumindest längere Zeit oder häufiger laufen als die übrigen Arbeitsaggregate des Anbaugeräts.

Dabei ist der genannte Antriebsstrang in Haupt- und Nebenantriebsstränge verzweigt, wobei der Hauptantriebsstrang das genannte zentrale Eingangsgetriebe enthält und noch die volle Antriebsleistung überträgt. Die Nebenantriebsstränge zweigen dann von dem besagten Hauptantriebsstrang ab und führen zu verschiedenen Arbeitsaggregaten.

Erfindungsgemäß ist die genannte Überlastsicherung zwar hinter dem Eingangsgetriebe, aber noch im Hauptantriebsstrang angeordnet, um die volle Antriebsleistung des Antriebsstrangs abzusichern.

Die Anordnung der Überlastsicherung nach dem Eingangsgetriebe, gleichzeitig aber noch im Hauptantriebsstrang reduziert einerseits den Einfluss von Drehschwingungen der Gelenkwelle auf die Überlastsicherung und vermeidet entsprechende Fehlauslösungen. Gleichzeitig sichert die Überlastsicherung aber die volle Antriebsleistung im Hauptantriebsstrang ab, sodass durch Auslösen der Überlastsicherung nicht nur das Eingangsgetriebe, durch das die volle Antriebsleistung geht, sondern auch nachfolgende Verzweigungsgetriebe und Nebenantriebsstränge vor Überlast geschützt werden können. Die volle Antriebsleistung der Schlepperzapfwelle liegt immer noch an der Überlastsicherung an, wenn man von den geringfügigen Verlusten im Bereich des zentralen Eingangsgetriebes absieht.

Gleichzeitig kann durch die Anordnung der Überlastsicherung nach dem Eingangsgetriebe auch die Handhabung der Gelenkwelle beim An- und Abkuppeln der Erntemaschine erleichtert werden, da das Gewicht der Überlastsicherung nicht mehr auf die Gelenkwelle wirkt. Zudem kann die Gelenkwelle auch einfacher bzw. kostengünstiger getauscht werden, die im weitesten Sinne ein Verschleißteil ist und von Zeit zu Zeit auszutauschen ist. Anders als bei Lösungen, bei denen die Überlastsicherung in die Gelenkwelle integriert ist, kann eine einfache Gelenkwelle separat getauscht werden.

In Weiterbildung der Erfindung kann die Überlastkupplung bzw. -sicherung mit seinem Kupplungseingangselement unmittelbar an ein Abtriebsrad, einen Abtriebswellenstummel bzw. ein anderes Abtriebselement des zentralen Eingangsgetriebes angebunden sein, beispielsweise durch eine Verbindungsmuffe, eine Keilwellenprofilierung oder ein anderes direktes, vorzugsweise formschlüssiges Verbindungselement. Gegebenenfalls kann die Abtriebswelle des Eingangsgetriebes auch gleichzeitig die Eingangswelle der Überlastkupplung bilden.

Das genannte zentrale Eingangsgetriebe kann grundsätzlich verschieden ausgebildet sein, wobei vorteilhafterweise als Eingangsgetriebe ein Umschlingungsgetriebe vorgesehen sein kann, dessen Eingangsrad direkt mit der von der Schlepperzapfwelle her kommenden Gelenkwelle verbunden sein kann, während ein Abtriebsrad des Umschlingungsgetriebes direkt mit dem Eingangselement der Überlastkupplung gekoppelt sein kann.

Das Umschlingungsgetriebe kann dabei als Riemengetriebe ausgebildet sein, dessen Eingangs- und Ausgangsräder als Riemenscheiben ausgebildet sein können, wobei ggf. auch noch zusätzliche Umlenkscheiben beispielsweise zum Spannen des Riementriebs vorgesehen sein können. Alternativ kann das Umschlingungsgetriebe aber auch als Kettengetriebe ausgebildet sein, dessen Kette um Kettenräder bzw. -ritzel umläuft.

Vorteilhafterweise kann sich das genannte Umschlingungsgetriebe über zumindest die halbe Maschinenbreite des Anbaugeräts erstrecken, insbesondere etwa von der Maschinenmitte bis zu einem linken oder rechten Seitenrand des Arbeitsgeräts, um einerseits zentral an die von der Schlepperzapfwelle her kommende Gelenkwelle angebunden werden zu können und andererseits ein sich seitlich am Anbaugerät erstreckendes Antriebsstrangelement antreiben zu können.

Insbesondere kann das Eingangsrad des Umschlingungsgetriebes mittig an einer Frontseite des Anbaugeräts angeordnet und eine liegende, in Fahrtrichtung weisende Drehachse aufweisen, um dort mit der Gelenkwelle verbunden zu werden. Das Abtriebsrad des Umschlingungsgetriebes kann seitlich rechts oder links am Anbaugerät vorgesehen, insbesondere an einem dortigen Maschinenrahmen- oder Anbauteil gelagert zu sein und eine ebenfalls liegende, in Fahrtrichtung weisende Drehachse haben.

Die genannte Überlastkupplung kann unmittelbar nach dem Abtriebsrad des Umschlingungsgetriebes angeordnet sein, insbesondere an einer rechten oder linken Seite des Anbaugeräts, und eine liegende, in Fahrtrichtung weisende Kupplungsdrehachse besitzen, wobei die Überlastkupplung an der Seite des Anbaugeräts direkt fluchtend zur Drehachse des Abtriebsrads des Umschlingungsgetriebes angeordnet sein und damit direkt formschlüssig gekoppelt sein kann. Abtriebsseitig kann die Überlastkupplung eine Abtriebswelle oder ein Abtriebsrad antreiben, das den Hauptantriebsstrang seitlich am Anbaugerät fortsetzt.

Durch die Verwendung eines solchen Umschlingungsgetriebes kommen die Vorteile der Anordnung der Überlastkupplung unmittelbar nach dem zentralen Eingangsgetriebe voll zur Geltung, da das Umschlingungsgetriebe durch sein endlos umlaufendes Umlaufmittel eine schwingungsdämpfende Wirkung hat und das Abtriebsrad zumindest näherungsweise frei von Drehschwingungen läuft, die von der Gelenkwelle her kommen, sodass die Überlastkupplung präzise ohne negative Einflüsse von Drehschwingungen bei dem gewünschten, definierten Auslösewert auslösen kann.

Die Ausbildung des Eingangsgetriebes als Umschlingungsgetriebe ist aber keineswegs zwingend. Beispielsweise kann als Eingangsgetriebe auch ein Zahnradgetriebe vorgesehen sein. Nach einer Weiterbildung der Erfindung kann als zentrales Eingangsgetriebe ein Winkelgetriebe vorgesehen sein, dessen Eingangswelle sich näherungsweise fahrtrichtungsparallel erstrecken und dessen Abtriebswelle sich quer zur Fahrtrichtung, beispielsweise liegend quer zur Fahrtrichtung erstrecken kann.

Bei Verwendung eines Winkelgetriebes als zentrales Eingangsgetriebe kann die Überlastkupplung unmittelbar anschließend an das Winkelgetriebe angeordnet sein, wobei die Überlastkupplung insbesondere zusammen mit dem Winkelgetriebe in einem Mittelabschnitt des Anbaugeräts beabstandet von dessen linken und rechten Seitenbereichen angeordnet sein kann.

Beispielsweise kann die Überlastkupplung eine Kupplungsdrehachse aufweisen, die sich liegend quer zur Fahrtrichtung erstreckt und koaxial zur Abtriebswelle des Winkelgetriebes angeordnet sein kann.

Die genannte Überlastkupplung kann grundsätzlich verschieden ausgebildet sein, beispielsweise eine Scherbolzenkupplung bilden oder als reibschlüssige Überlastkupplung arbeiten. In vorteilhafter Weiterbildung der Erfindung kann die Überlastkupplung auch eine Sperrkörperkupplung sein, insbesondere in Form einer schaltbaren Nockenschaltkupplung ausgebildet sein, deren Nocken nach Auslösen der Kupplung wieder zurück in die verriegelnde Stellung gefahren werden können.

Die zentrale Überlastkupplung im Hauptantriebsstrang nach dem zentralen Eingangsgetriebe kann in Weiterbildung der Erfindung durch zusätzliche Überlastkupplungen in nachgeordneten Abschnitten des Antriebsstrangs ergänzt werden. Insbesondere kann zumindest eine weitere Überlastkupplung in zumindest einem Nebenantriebsstrang vorgesehen sein, beispielsweise einem Nebenantriebsstrang, der eine Abladedosiervorrichtung antreibt oder einem Nebenantriebsstrang, der einen Förderrotor antreibt, dem ein Schneidwerk zugeordnet sein kann.

Die Überlastsicherungsanordnung kann in vorteilhafter Weise in einem Ladewagen und/oder in einer Ballenpresse eingesetzt sein, der bzw. die als Arbeitsaggregat eine Aufnahmevorrichtung mit einer rotatorisch antreibbaren Stachelwalze zum Aufnehmen von Fördergut vom Boden sowie einen Förderrotor zum Weiterfördern des aufgenommenen Ernteguts in einen Funktionsraum aufweist, wobei der genannte Funktionsraum im Falle eines Ladewagens ein Ladespeicherraum sein kann und im Falle einer Ballenpresse die Ballenformkammer sein kann.

Bei Ausbildung des Anbaugeräts als Ladewagen bzw. Ballenpresse kann die genannte Überlastkupplung vor einem Verzweigungs- und/oder Durchgangsgetriebe zum Antreiben des Förderrotors sowie eines weiteren Arbeitsaggregats sitzen. Solche weiteren Arbeitsaggregate können im Falle eines Ladewagens dessen Kratzboden und ein Abladedosieraggregat sein. Im Falle einer Ballenpresse können als weitere Arbeitsaggregate Förderwalzen oder Riementriebe im Bereich der Ballenformkammer vorgesehen sein.

Grundsätzlich kann das Anbaugerät aber nicht nur als Ladewagen oder Ballenpresse ausgebildet sein. Die Anordnung der Überlastkupplung kann auch bei anderen Anbaugeräten wie einem Kreiselschwader mit mehreren Rechkreiseln oder anderen Grünland- oder Bodenbearbeitungsgeräten vorteilhaft eingesetzt werden.

Nachfolgend wird die Erfindung anhand bevorzugter Ausführungsbeispiele und zugehörigen Zeichnungen näher erläutert. In den Zeichnungen zeigen:

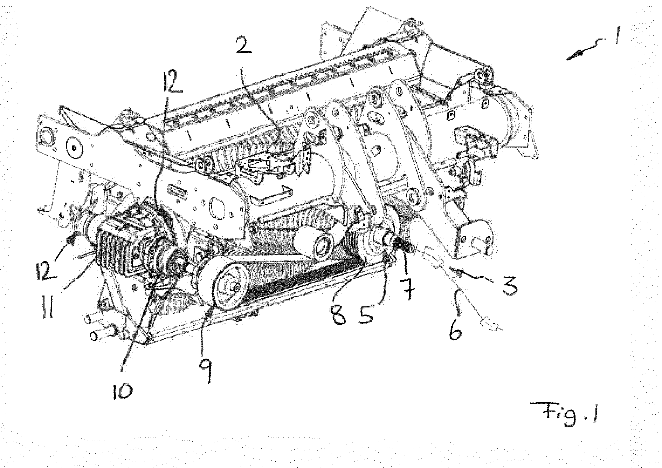

- Fig. 1:: eine perspektivische Ansicht des Antriebsstrangs eines Ladewagens und/oder einer Ballenpresse zum Antreiben der Aufnahmevorrichtung umfassend eine rotierende Stachelwalze und einen nachgeordneten Förderrotor, wobei als zentrales Eingangsgetriebe ein Umschlingungsgetriebe vorgesehen und die Überlastkupplung der seitlich angeordneten Abtriebswelle des Umschlingungsgetriebes zugeordnet ist, und

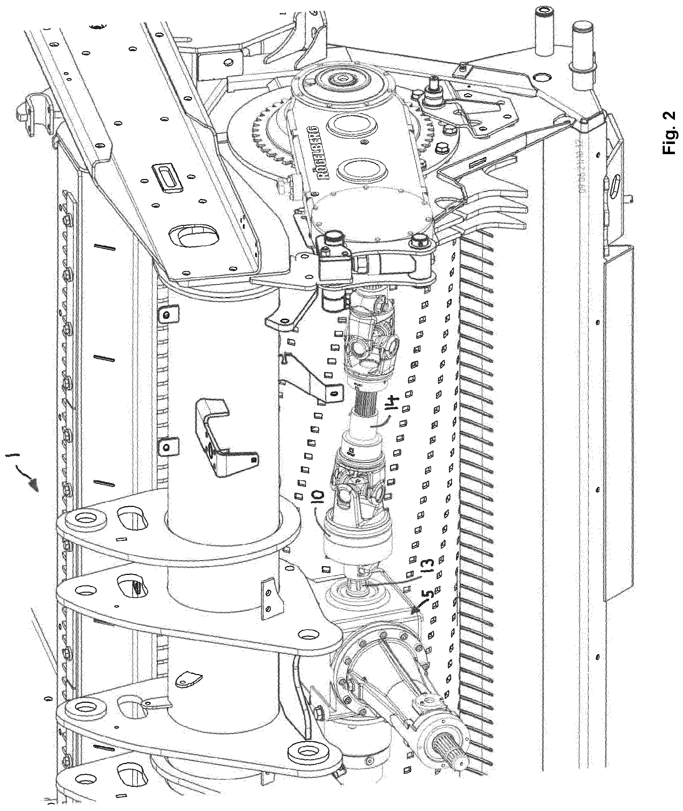

- Fig. 2:: eine ausschnittsweise perspektivische Darstellung des Hauptantriebsstrangs eines Anbaugeräts wie Ladewagen oder Ballenpresse, mit einem zentralen Eingangsgetriebe in Form eines Winkelgetriebes, auf dessen Abtriebswellenstummel die zentrale Überlastkupplung sitzt.

Wie Figur 1 zeigt, kann das landwirtschaftliche Anbaugerät 1 zum Anbau an einen nicht gezeigten Schlepper als Erntemaschine ausgebildet sein, die als Arbeitsaggregate eine Aufnahmevorrichtung beispielsweise mit einer rotatorisch antreibbaren Stachelwalze zum Aufnehmen von Erntegut vom Boden sowie einen der Aufnahmevorrichtung nachgeordneten Förderrotor 2 umfassen kann, der den von der Aufnahmevorrichtung her kommenden Erntegutstrom durch einen Förderkanal hindurch in einen Funktionsraum des Anbaugeräts fördern kann. Der genannte Förderrotor 2 kann beispielsweise um eine liegende, sich quer zur Fahrtrichtung erstreckende Achse rotatorisch angetrieben werden.

Dem genannten Förderrotor 2 können weitere Arbeitsaggregate nachgeordnet sein, beispielsweise ein Kratzboden oder eine Abladedosierwalzeneinrichtung, wenn die Erntemaschine als Ladewagen ausgebildet ist. Bei Ausbildung als Ballenpresse können dem Förderrotor 2 weitere Arbeitsaggregate in Form von Umlenkwalzen und/oder Riemenantrieben im Bereich einer Ballenformkammer nachgeordnet sein.

Die genannten Antriebsaggregate werden von einem mechanischen Antriebsstrang 3 angetrieben, der einen Hauptantriebsstrang 4 mit einem zentralen Eingangsgetriebe 5 umfasst, das über eine Gelenkwelle 6 an die Schlepperzapfwelle angeschlossen werden kann. Wie Figur 1 zeigt, kann das zentrale Eingangsgetriebe 5 einen Eingangswellenstummel 7 aufweisen, der sich in einem Mittelabschnitt des Anbaugeräts 1, beispielsweise unter einer Deichsel liegend näherungsweise fahrtrichtungsparallel erstrecken kann. Auf den genannten Eingangswellenstummel 7 des zentralen Eingangsgetriebes 5 kann die genannte Gelenkswelle 6 aufgesteckt oder in anderer Weise drehfest, vorzugsweise formschlüssig befestigt werden.

Wie Figur 1 zeigt, kann das zentrale Eingangsgetriebe 5 des Hauptantriebsstrangs 4 als Umschlingungsgetriebe beispielsweise in Form eines Riemengetriebes ausgebildet sein, dessen Eingangsrad 8 auf dem genannten Eingangswellenstummel 7 sitzen kann und dessen Abtriebsrad 9 an einer rechten oder linken Seite des Anbaugeräts 1 sitzen kann. Zwischen den genannten Eingangs- und Abtriebsrädern 8, 9 kann das Umschlingungsgetriebe weitere Umlenkräder wie beispielsweise eine Riemen- oder Kettenspanner aufweisen.

Die genannten Eingangs- und Abtriebsräder 8, 9 des zentralen Eingangsgetriebes können jeweils liegende, etwa in Fahrtrichtung weisende Drehachsen aufweisen, wobei unabhängig hiervon das genannte Umschlingungsgetriebe zumindest die halbe Maschinenbreite des Anbaugeräts 1 überbrücken kann.

Wie Figur 1 zeigt, kann unmittelbar nach dem Abtriebsrad 9 des zentralen Eingangsgetriebes 5 eine Überlastkupplung 10 vorgesehen sein, die drehfest direkt mit dem Abtriebsrad 9 bzw. dem damit gekoppelten Wellenstummel des zentralen Eingangsgetriebes 5 verbunden sein kann, sodass sich die Überlastkupplung 10 synchron mit der Abtriebsdrehzahl des Eingangsgetriebes 5 drehen kann.

Wie Figur 1 zeigt, kann die Überlastkupplung 10 an derselben linken bzw. rechten Seite des Anbaugeräts 1 wie das Abtriebsrad 9 des Eingangsgetriebes 5 angeordnet sein und eine liegende, näherungsweise in Fahrtrichtung weisende Drehachse besitzen.

Insbesondere kann die Überlastkupplung 10 koaxial zur Drehachse des Abtriebsrads 9 angeordnet sein.

Die Überlastkupplung 10 sitzt dabei immer noch im Hauptantriebsstrang und wird mit der vollen Antriebsleistung der Schlepperzapfwelle beaufschlagt, die lediglich durch die Verluste im Eingangsgetriebe 5 reduziert sein kann.

Die genannte Überlastkupplung 10 ist die von der Schlepperzapfwelle her betrachtet erste Überlastsicherung im Antriebsstrang 3, wobei die Überlastkupplung 10 noch vor Verzweigungen des Antriebsstrang 3 in Nebenantriebsstränge sitzen kann.

Wie Figur 1 zeigt, kann sich der genannte Hauptantriebsstrang 4 über ein Verzweigungsgetriebe 11 verzweigen, das eingangsseitig von der Überlastkupplung 10 angetrieben wird. Das genannte Verzweigungsgetriebe 11 kann beispielsweise ein Winkelgetriebe umfassen, das den genannten Förderrotor 2 antreibt. Unabhängig hiervon kann das Verzweigungsgetriebe 11 einen Durchtrieb umfassen, um ein weiteres Arbeitsaggregat beispielsweise in Form eines heckseitig angetriebenen Abladedosiersystems anzutreiben. Gegebenenfalls kann von dem genannten Verzweigungsgetriebe 11 auch ein Nebenantriebsstrang zum Antreiben der Pickup bzw. der Stachelwalze der Aufnahmevorrichtung abgehen. Alternativ oder zusätzlich können andere Nebenantriebsstränge 12 zu anderen Arbeitsaggregaten der Erntemaschine führen, um letztere anzutreiben, beispielsweise einen Ladewagen-Kratzboden oder Ballenpressen-Formkammer-Elemente.

In den besagten Nebenantriebssträngen 12 können ggf. weitere Überlastkupplungen vorgesehen sein.

Wie Figur 2 zeigt, kann das zentrale Eingangsgetriebe 5 der Erntemaschine aber auch als Winkelgetriebe ausgebildet sein, dessen Eingangswellenstummel sich ähnlich wie zuvor beschrieben liegend, näherungsweise fahrtrichtungsparallel im Mittelabschnitt des Anbaugeräts 1, beispielsweise unter einer Deichsel, erstrecken kann.

Die Abtriebswelle 13 bzw. der Abtriebswellenstummel des Winkelgetriebes kann sich liegend quer zur Fahrtrichtung erstrecken, um eine Antriebswelle 14 anzutreiben, die zu einem seitlich angeordneten Verteilergetriebe bzw. Verzweigungsgetriebe 11 führen kann, das in der vorgenannten Weise beispielsweise den Förderrotor 2 antreiben und über weitere, abgehende Abtriebs- oder Durchtriebswellen weitere Arbeitsaggregate antreiben bzw. die Antriebsleistung in entsprechende Nebenantriebsstränge 12 einspeisen kann.

Wie Figur 2 zeigt, kann die Überlastkupplung 10 unmittelbar an dem Winkelgetriebe angeordnet sein, beispielsweise direkt auf dessen Abtriebswellenstummel 13 sitzen und abtriebsseitig wiederum mit der Antriebswelle 14 gekoppelt sein, wobei die Antriebswelle 14 beispielsweise koaxial zur Abtriebswelle der Überlastkupplung angeordnet bzw. direkt damit verbunden sein kann.

Die Überlastkupplung 10 kann vorteilhafterweise als Nockenschaltkupplung ausgebildet sein, wobei aber auch andere Überlastkupplungs-Bauformen in Betracht kommen, beispielsweise reibschlüssig arbeitende Überlastsicherungskupplungen oder Scherbolzenkupplungen.

## Patentansprüche

1. Landwirtschaftliches Anbaugerät zum Anbau an einen Schlepper, mit einem Antriebsstrang (3) zum Antreiben von Arbeitsaggregaten des Anbaugeräts einschließlich eines Arbeitsrotors (2), wobei der Antriebsstrang (3) ein zentrales Eingangsgetriebe (5), das über eine Gelenkwelle (6) an die Zapfwelle des Schleppers anschließbar ist, sowie eine Überlastkupplung (10) aufweist, die nach dem zentralen Eingangsgetriebe (5), vorgesehen ist und zumindest den genannten Arbeitsrotor (2) absichert, wobei der genannte Antriebsstrang (3) einen Hauptantriebsstrang (4), in dem das zentrale Eingangsgetriebe (5) vorgesehen ist, und vom Hauptantriebsstrang (4) zu den Arbeitsaggregaten abzweigende Nebenantriebsstränge (12) aufweist, **dadurch gekennzeichnet, dass** die genannte Überlastkupplung (10) noch im Hauptantriebsstrang (4) vor den abzweigenden Nebenantriebssträngen (12) vorgesehen ist.

2. Landwirtschaftliches Anbaugerät nach dem vorhergehenden Anspruch, wobei der genannte Arbeitsrotor (2) ein Hauptarbeitsrotor des Anbaugeräts ist, der im Arbeitsbetrieb einen höheren Antriebsenergieverbrauch als andere Arbeitsaggregate aufweist und/oder im Arbeitsbetrieb permanent läuft und/oder längere Zeit und/oder häufiger läuft als andere Arbeitsaggregate des Anbaugeräts.

3. Landwirtschaftliches Anbaugerät nach einem der vorhergehenden Ansprüche, wobei das zentrale Eingangsgetriebe (5) ein Umschlingungsgetriebe ist, dessen Eingangsrad (8) direkt mit der Gelenkwelle (6) drehfest verbunden ist und ein Abtriebsrad (9) besitzt, das mit dem Kupplungseingang der Überlastkupplung (10) drehfest verbunden ist.

4. Landwirtschaftliches Anbaugerät nach dem vorhergehenden Anspruch, wobei das Umschlingungsgetriebe sich über zumindest die halbe Maschinenbreite des Anbaugeräts (1) erstreckt, wobei das Abtriebsrad (9) an einer rechten oder linken Seite des Anbaugeräts (1) angeordnet ist und die Überlastkupplung (10) unmittelbar nach dem genannten Abtriebsrad (9) auf derselben Maschinenseite wie das Abtriebsrad (9) angeordnet ist.

5. Landwirtschaftliches Anbaugerät nach einem der beiden vorhergehenden Ansprüche, wobei das Abtriebsrad (9) und die Überlastkupplung (10) eine liegende, zumindest näherungsweise fahrtrichtungsparallele Drehachse besitzen und/oder zueinander koaxiale Drehachsen aufweisen.

6. Landwirtschaftliches Anbaugerät nach einem der vorhergehenden Ansprüche, wobei zwischen der Überlastkupplung (10) und dem Abtriebsrad (9) des zentralen Eingangsgetriebes (5) lediglich ein Drehlager zum drehbaren Abstützen des Abtriebsrads (9) des zentralen Eingangsgetriebes (5) vorgesehen ist.

7. Landwirtschaftliches Anbaugerät nach Anspruch 1, wobei das zentrale Eingangsgetriebe (5) ein Zahnradgetriebe, insbesondere ein Winkelgetriebe ist, wobei die Überlastkupplung (10) mit ihrem Kupplungseingang drehfest mit der Abtriebswelle des Zahnradgetriebes gekoppelt ist.

8. Landwirtschaftliches Anbaugerät nach dem vorhergehenden Anspruch, wobei die Überlastkupplung (10) benachbart zum zentralen Eingangsgetriebe (5) in einem Mittelabschnitt des Anbaugeräts beabstandet von dessen linken und rechten Seiten angeordnet ist.

9. Landwirtschaftliches Anbaugerät nach einem der beiden vorhergehenden Ansprüche, wobei eine Abtriebswelle (13) des zentralen Eingangsgetriebes (5) und die Überlastkupplung (10) jeweils eine liegende, quer zur Fahrtrichtung angeordnete Drehachse besitzen und/oder zueinander koaxiale Drehachsen besitzen.

10. Landwirtschaftliches Anbaugerät nach einem der vorhergehenden Ansprüche, wobei zumindest eine weitere Überlastkupplung in zumindest einem Nebenantriebsstrang (12), der von dem Hauptantriebsstrang (4) abzweigt, vorgesehen ist.

11. Landwirtschaftliches Anbaugerät nach einem der vorhergehenden Ansprüche, wobei das Anbaugerät (1) als Ladewagen oder Ballenpresse ausgebildet ist und als Arbeitsaggregat eine Aufnahmevorrichtung mit einer rotatorisch antreibbaren Stachelwalze zum Aufnehmen von Erntegut vom Boden sowie einen Förderrotor (2) zum Weiterfördern des vom Boden aufgenommenen Ernteguts in einen Funktionsraum, der einen Ladespeicher oder eine Ballenformkammer bildet, aufweist, wobei die Überlastkupplung (10) vor einem Verzweigungs- und/oder Durchgangsgetriebe (11) zum Antreiben des genannten Förderrotors (2) sowie zumindest eines weiteren Arbeitsaggregats angeordnet ist.

12. Landwirtschaftliches Anbaugerät nach einem der vorhergehenden Ansprüche, wobei die Überlastkupplung (10) im Hauptantriebsstrang (4) von der vollen Zapfwellenantriebsleistung des Schleppers abzüglich etwaigen Verlusten im zentralen Eingangsgetriebe (5) beaufschlagbar ist.

## Claims

1. Agricultural implement for attachment to a tractor, comprising a drive train (3) for driving working units of the implement including a working rotor (2), wherein the drive train (3) comprises a central input gearbox (5), which is connectable to the PTO shaft of the tractor via a universal joint shaft (6), and an overload clutch (10), which is provided downstream of the central input gearbox (5) and secures at least the said working rotor (2), wherein said drive train (3) has a main drive train (4), in which the central input gearbox (5) is provided and auxiliary drive trains (12) branching off from the main drive train (4) to the working units, **characterized in that** said overload clutch (10) is yet provided in the main drive train (4) upstream of the branching auxiliary drive trains (12).

2. Agricultural implement according to the preceding claim, wherein said working rotor (2) is a main working rotor of the implement, which in working operation has a higher drive energy consumption than other working units and/or runs permanently in working operation and/or runs for a longer time and/or more frequently than other working units of the implement.

3. Agricultural implement according to one of the preceding claims, wherein the central input gearbox (5) is a continuously variable transmission, the input gear (8) of which is directly connected to the universal joint shaft (6) in a co-rotational manner and has a driven gear (9) which is connected to the clutch input of the overload clutch (10) in a co-rotational manner.

4. Agricultural implement according to the preceding claim, wherein the continuously variable transmission extends over at least half the machine width of the implement (1), wherein the driven gear (9) is arranged on a right or left side of the implement (1) and the overload clutch (10) is arranged immediately after said driven gear (9) on the same machine side as the driven gear (9).

5. Agricultural implement according to one of the two preceding claims, wherein the driven gear (9) and the overload clutch (10) have a horizontal axis of rotation which is at least approximately parallel to the direction of travel and/or have axes of rotation which are coaxial to one another.

6. Agricultural implement according to one of the preceding claims, wherein only a pivot bearing is provided between the overload clutch (10) and the driven gear (9) of the central input gearbox (5) for rotatably supporting the driven gear (9) of the central input gearbox (5).

7. Agricultural implement according to claim 1, wherein the central input gearbox (5) is a gear transmission, in particular an angular transmission, wherein the overload clutch (10) is coupled with its clutch input to the output shaft of the gear transmission in a co-rotational manner.

8. Agricultural implement according to the preceding claim, wherein the overload clutch (10) is arranged adjacent to the central input gearbox (5) in a central portion of the implement spaced from the left and right sides thereof.

9. Agricultural implement according to one of the two preceding claims, wherein an output shaft (13) of the central input gearbox (5) and the overload clutch (10) each have a horizontal axis of rotation arranged transversely to the direction of travel and/or have axes of rotation which are coaxial with one another.

10. Agricultural implement according to one of the preceding claims, wherein at least one further overload clutch is provided in at least one auxiliary drive train (12) branching off from the main drive train (4).

11. Agricultural implement according to one of the preceding claims, wherein the implement (1) is configured as a loader wagon or baler and has, as working unit, a pick-up device with a rotationally drivable spiked roller for picking up harvested material from the ground and a conveyor rotor (2) for conveying the harvested material picked up from the ground into a functional space, which forms a loading store or a bale forming chamber, wherein the overload clutch (10) is arranged upstream of a branching and/or gearbox (11) for driving the said conveyor rotor (2) and at least one further working unit.

12. Agricultural implement according to one of the preceding claims, wherein the overload clutch (10) in the main drive train (4) can be applied with the full PTO shaft drive power of the tractor minus any losses in the central input gearbox (5).

## Revendications

1. Accessoire agricole destiné à être monté sur un tracteur, comportant une chaîne cinématique (3) destinée à entraîner des organes de travail de l'accessoire y compris un rotor de travail (2), la chaîne cinématique (3) présentant un mécanisme de transmission d'entrée central (5), qui peut être relié à l'arbre de prise de force du tracteur par le biais d'un arbre articulé (6), ainsi qu'un accouplement de surcharge (10) qui est prévu après le mécanisme de transmission d'entrée central (5) et protège au moins ledit rotor de travail (2), ladite chaîne cinématique (3) présentant une chaîne cinématique principale (4) dans laquelle est prévu le mécanisme de transmission d'entrée central (5) et des chaînes cinématiques secondaires (12) bifurquant de la chaîne cinématique principale (4) vers les organes de travail, **caractérisé en ce que** ledit accouplement de surcharge (10) est prévu dans la chaîne cinématique principale (4) même, avant les chaînes cinématiques secondaires (12) bifurquant de celle-ci.

2. Accessoire agricole selon la revendication précédente, dans lequel ledit rotor de travail (2) est un rotor de travail principal de l'accessoire qui présente, en régime de travail, une consommation d'énergie d'entraînement supérieure à d'autres organes de travail et/ou qui fonctionne en continu en régime de travail et/ou qui fonctionne plus longtemps et/ou plus souvent que d'autres organes de travail de l'accessoire.

3. Accessoire agricole selon l'une des revendications précédentes, dans lequel le mécanisme de transmission d'entrée central (5) est un mécanisme de transmission à enroulement, dont la roue d'entrée (8) est directement reliée solidaire en rotation à l'arbre articulé (6), et possède une roue de sortie (9) qui est reliée solidaire en rotation à l'entrée de l'accouplement de surcharge (10).

4. Accessoire agricole selon la revendication précédente, dans lequel le mécanisme de transmission à enroulement s'étend sur au moins la moitié de la largeur de machine de l'accessoire (1), la roue de sortie (9) étant disposée sur un côté droit ou gauche de l'accessoire (1) et l'accouplement de surcharge (10) étant disposé directement après ladite roue de sortie (9) sur le même côté de la machine que la roue de sortie (9).

5. Accessoire agricole selon l'une des deux revendications précédentes, dans lequel la roue de sortie (9) et l'accouplement de surcharge (10) possèdent un axe de rotation horizontal, au moins approximativement parallèle au sens de la marche et/ou présentent des axes de rotation coaxiaux l'un par rapport à l'autre.

6. Accessoire agricole selon l'une des revendications précédentes, dans lequel seulement un palier de pivotement est prévu entre l'accouplement de surcharge (10) et la roue de sortie (9) du mécanisme de transmission d'entrée central (5) pour le support rotatif de la roue de sortie (9) du mécanisme de transmission d'entrée central (5).

7. Accessoire agricole selon la revendication 1, dans lequel le mécanisme de transmission d'entrée central (5) est un mécanisme de transmission à engrenages, en particulier un engrenage angulaire, l'accouplement de surcharge (10) étant couplé avec son entrée d'accouplement de manière solidaire en rotation à l'arbre de sortie du mécanisme de transmission à engrenages.

8. Accessoire agricole selon la revendication précédente, dans lequel l'accouplement de surcharge (10) est disposé avoisinant le mécanisme de transmission d'entrée central (5) dans une partie médiane de l'accessoire, à distance des côtés gauche et droit de ce dernier.

9. Accessoire agricole selon l'une des deux revendications précédentes, dans lequel un arbre de sortie (13) du mécanisme de transmission d'entrée central (5) et l'accouplement de surcharge (10) possèdent chacun un axe de rotation horizontal, disposé transversalement au sens de la marche et/ou possèdent des axes de rotation coaxiaux l'un par rapport à l'autre.

10. Accessoire agricole selon l'une des revendications précédentes, dans lequel au moins un autre accouplement de surcharge est prévu dans au moins une chaîne cinématique secondaire (12), qui bifurque de la chaîne cinématique principale (4).

11. Accessoire agricole selon l'une des revendications précédentes, dans lequel l'accessoire agricole (1) est réalisé sous la forme d'une remorque autochargeuse ou d'une presse à balles et présente, comme organe de travail, un dispositif de ramassage doté d'un rouleau à pointes apte à être entraîné en rotation et destiné à recevoir la récolte du sol ainsi qu'un rotor de transport (2) destiné à transporter la récolte ramassée sur le sol dans un espace fonctionnel qui forme un réservoir de chargement ou une chambre de mise en balles, l'accouplement de surcharge (10) étant disposé avant un mécanisme de transmission de division et/ou de passage (11) destiné à l'entraînement dudit rotor de transport (2) ainsi que d'au moins un autre organe de travail.

12. Accessoire agricole selon l'une des revendications précédentes, dans lequel l'accouplement de surcharge (10) dans la chaîne cinématique principale (4) peut recevoir toute la puissance d'entraînement de l'arbre de prise de force du tracteur moins les éventuelles pertes survenant dans le mécanisme de transmission d'entrée central (5).
